# EUROPEAN PATENT APPLICATION

(11) **EP 4 691 837 A1**
(43) Date of publication of application: **11.02.2026**
(21) Application number: 24193846.3
(22) Date of filing: 09.08.2024
(51) Int. Cl.: B60L 53/124, B60L 53/126, B60L 53/38, H02J 50/10

(54) **CHARGING STATION**

(71) Applicant: Siemens Aktiengesellschaft, 80333 München (DE)
(72) Inventor: Percebon, Leandro, 81927 München (DE); Seisenberger, Claus, 84181 Neufrannhofen (DE)
(74) Representative: Siemens Patent Attorneys

(57) **Abstract**

The invention relates to a charging station (100) for electric vehicles (400), comprising
- an electric energy source (150), which is equipped and configured for charging an electric vehicle (400),
- a parking space (110) for a vehicle (110), and
- a vehicle presence detection device (20), which is equipped and configured for detecting the presence of a vehicle (400) in the parking space (110), regardless of whether the vehicle (400) is an electric vehicle (400) being charged, an electric vehicle (400) having been charged or any other vehicle (400) being parked in the parking space (110), and regardless of weather conditions.

## Description

For electric vehicle charging systems it is in many cases a required feature to detect if the charger is occupied by a vehicle. This information is needed to show availability of chargers to approaching vehicles which want to charge. Therefore, it is not sufficient to detect if a charging process is active, but it should also be detected if the vehicle is still present after charging and also if an electric vehicle or non electric vehicle is just parked there and blocking the charging space.

In case of wireless power transfer (WPT), vehicle presence detection has also a safety aspect, to guarantee that inductive power field is only switched on, when a vehicle is above, to prevent that persons are exposed to hazardous electromagnetic fields.

Some chargers use only status of ongoing charging process for occupancy detection, but this means that just parked vehicles are not detected, and the charger is reported as available even if it is blocked.

It is also known that camera systems can be used for vehicle presence detection. But these systems require a sophisticated detection algorithm and are not fully reliable, especially in bad weather conditions.

It is an object of the invention to provide electric vehicle charging systems with a reliable vehicle presence detection.

This object is achieved by a charging station for electric vehicles according to claim 1.

Advantageous further examples and embodiments of the present invention are the subject of the dependent claims.

A charging station for electric vehicles comprises
- an electric energy source, which is equipped and configured for charging an electric vehicle,
- a parking space for a vehicle, and
- a vehicle presence detection device, which is equipped and configured for detecting the presence of a vehicle in the parking space, regardless of whether the vehicle is an electric vehicle being charged, an electric vehicle having been charged or any other vehicle being parked in the parking space.

The vehicle presence detection device of the inventive charging system provides a reliable statement on the status of the charging station, i.e. whether or not the charging station can be offered for charging to approaching vehicles.

According to examples of the present disclosure, the vehicle presence detection device comprises at least one inductive loop detector positioned on or in the ground of the parking space and extending over a significant portion of the parking space. Inductive loop detectors are simple and cheap and can easily be installed on or in the ground of a parking space. Operating frequency of such a loop detector is typically between 10kHz and 10MHz. An inductive loop detector is much more reliable in detecting vehicle presence than a camera system, especially in bad weather conditions.

According to examples of the present disclosure, the at least one inductive loop detector comprises a decoupled loop structure. For instance, the decoupled loop structure can be 8-shaped. To avoid high induced voltages from the power field, a decoupled loop structure like an 8-shape can be used.

The proposed charging station can be equipped and configured for wired charging, i.e. have a charging cable that must be plugged in the electric vehicle for charging.

According to examples of the present disclosure, the charging station may further comprise a ground assembly positioned underneath the parking space, which is equipped and configured for wireless charging.

In this case, it may be advantageous to provide that the inductive loop detector is integrated in the ground assembly. For instance, the inductive loop detector can be arranged along or close to the perimeter of the ground assembly. This will result in the inductive loop detector being as large as possible.

According to examples of the present disclosure, it may be provided that the inductive loop detector extends over the entire area of the parking space. In some embodiments, the inductive loop detector may be arranged on or close to a top cover of the underground assembly.

By integration of an inductive loop detector in the ground assembly of a wireless charging system, presence of a vehicle can be detected. The detector loop should be as big as possible to also detect vehicles with high ground clearance, so it is preferred to be placed in the outer edge of the housing, at least of the top cover.

Additionally or alternatively, the inductive loop detector may be integrated in a FOD loop array board of the underground assembly. Advantageously, it may be provided that the inductive loop detector and the FOD loop array share the same control electronics.

To reduce cost and complexity it is possible to use the same electronics as is used for foreign object detection (FOD) which is a mandatory system in Wireless Power Transfer (WPT) anyway. For further cost reduction, it is possible to integrate the detection loop in the loop array board of FOD. For FOD it is necessary to have an array of smaller detection loops to detect even very small metallic objects, so the detection height of these smaller loops is not sufficient to detect vehicle presence reliably. By integrating the loop detector in the FOD electronics and FOD loop array board, vehicle presence detection can be realized at minimum additional cost.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

The present invention will become more fully understood from the detailed description given herein below and the accompanying drawings which are given by way of illustration only, and thus, are not limitative of the present invention, and wherein:
- Figure 1: shows a typical charging station for electric vehicles,
- Figure 2: shows a first embodiment of a vehicle presence device of charging station, and
- Figure 3: shows a second embodiment of a vehicle presence device of charging station.

Reference will now be made in detail to the present embodiments, examples of which are illustrated in the accompanying drawings. Wherever possible, the same reference numbers will be used throughout the drawings to refer to the same or like parts.

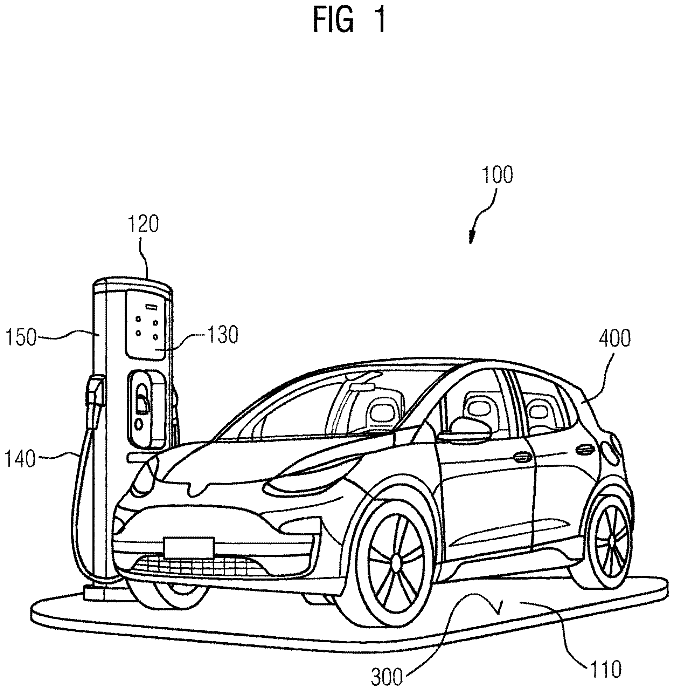

The charging station 100 in Figure 1 comprises a parking space 110 which is occupied by an electric vehicle 400. The charging station 100 further comprises a control terminal 120 providing a user interface 130 and a charging cable 140 for wired charging and being connected to an energy source 150 such as a power grid. Underneath the parking space there is a ground assembly 300 which is equipped and configured for wireless charging if a customer's vehicle 400 so permits.

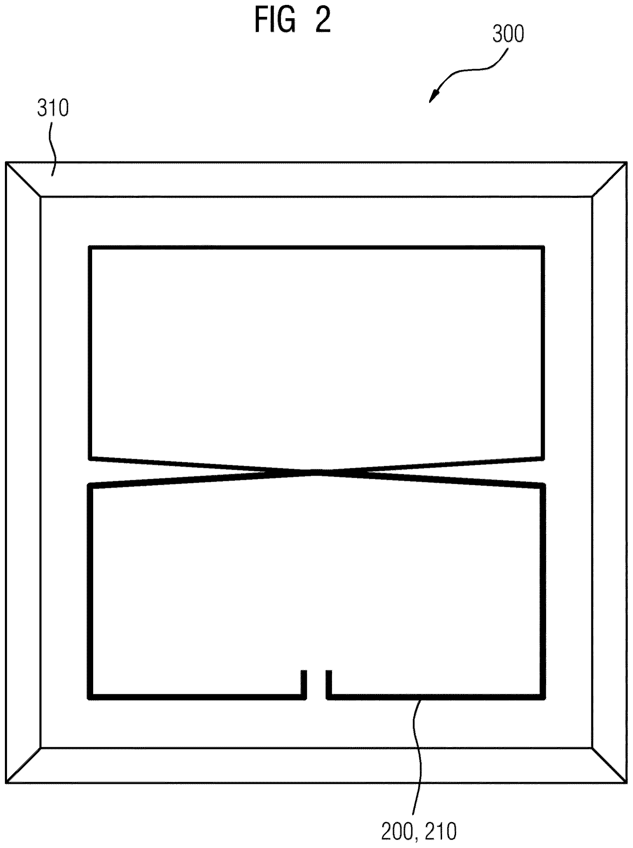

Figure 2 shows a top cover 310 of such ground assembly 300. On the underside of the top cover 310 there is arranged an inductive loop detector 210 of a vehicle presence detection device 200 which comprises an 8-shaped decoupled loop structure.

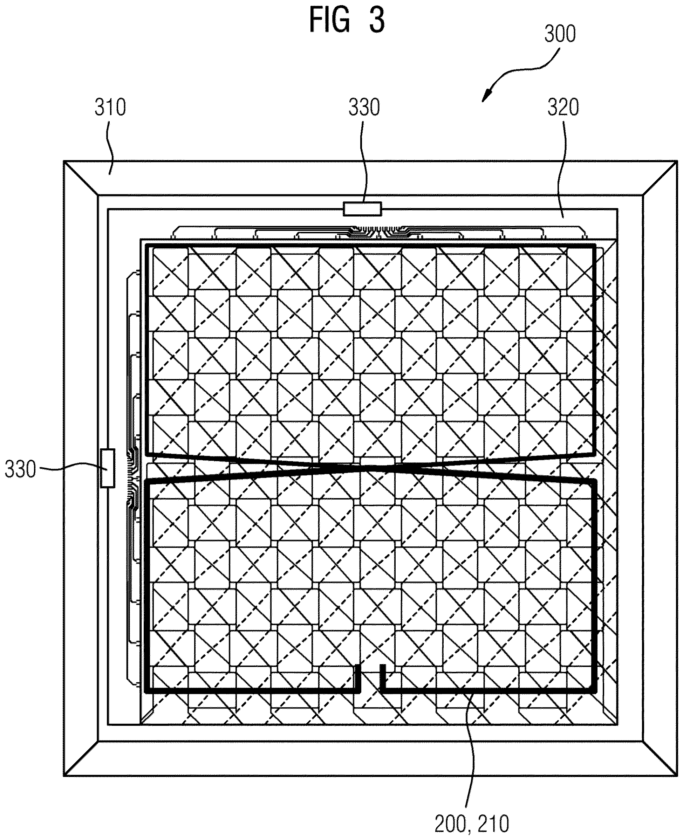

In Fig. 3, another embodiment is shown wherein underneath the top cover 310 of the ground assembly 300, there is provided a FOD loop array board 320 for foreign object detection. An inductive loop detector 210 of a vehicle presence detection device 200 is integrated in the FOD loop array board 320 and shares the same Control electronics 330 with the FOD loop array board 320.

Independent of the grammatical term usage, individuals with male, female or other gender identities are included within the term.

## Claims

1. A charging station (100) for electric vehicles (400), comprising
- an electric energy source (150), which is equipped and configured for charging an electric vehicle (400),
- a parking space (110) for a vehicle (400), and
- a vehicle presence detection device (200), which is equipped and configured for detecting the presence of a vehicle (400) in the parking space (110), regardless of whether the vehicle (400) is an electric vehicle (400) being charged, an electric vehicle (400) having been charged or any other vehicle (400) being parked in the parking space (110), and regardless of weather conditions.

2. The charging station of claim 1,
wherein the vehicle presence detection device (200) comprises at least one inductive loop detector (210) positioned on or in the ground of the parking space (110) and extending over a significant portion of the parking space (110).

3. The charging station of claim 2,
wherein the at least one inductive loop detector (210) comprises a decoupled loop structure.

4. The charging station of claim 3,
wherein the decoupled loop structure is 8-shaped.

5. The charging station of any one of claims 1 to 4,
comprising a ground assembly (300) positioned underneath the parking space (110), which is equipped and configured for wireless charging.

6. The charging station of claim 5 and any one of claims 2 to 4,
wherein the inductive loop detector (210) is integrated in the ground assembly (300).

7. The charging station of claim 6,
wherein the inductive loop detector (210) is arranged along or close to the perimeter of the ground assembly (300).

8. The charging station of claim 6 or 7,
wherein the inductive loop detector (210) is arranged on or close to a top cover (310) of the ground assembly (300).

9. The charging station of any one of claims 6 to 8,
wherein the inductive loop detector (210) is integrated in a FOD loop array board (320) of the ground assembly (300).

10. The charging station of claim 9,
wherein the inductive loop detector (210) and the FOD loop array board (320) share the same control electronics (330).
